(19) Europäisches Patentamt

European Patent Office

Office européen des brevets

(11) Veröffentlichungsnummer: **0 424 828 A1**

## (12) EUROPÄISCHE PATENTANMELDUNG

(21) Anmeldenummer: 90120131.9

(22) Anmeldetag: 19.10.90

(51) Int. Cl.5: **G01F 1/84**

(30) Priorität: 26.10.89 LU 87612

(43) Veröffentlichungstag der Anmeldung:
02.05.91 Patentblatt 91/18

(84) Benannte Vertragsstaaten:
**BE DE DK ES FR GB GR IT LU NL**

(71) Anmelder: **Europäische Wirtschaftsgemeinschaft Bâtiment Jean Monnet**
**Plateau du Kirchberg**
**L-2920 Luxemburg(LU)**

(72) Erfinder: **Sanders, Jürgen**
**Via Girolo 20**
**I-21027 Ispra(IT)**

(74) Vertreter: **Weinmiller, Jürgen**
**Lennéstrasse 9 Postfach 24**
**W-8133 Feldafing(DE)**

(54) **Massenflussmessgerät für Zweiphasenströmungen flüssig/gasförmig.**

(57) Die Erfindung betrifft ein Massenflußmeßgerät für Zweiphasenströmungen flüssig/gasförmig. Erfindungsgemäß ist ein U-förmig gebogenes Rohr (4), durch das die zu messende Strömung zwischen zwei Drehdichtungen (5, 6) verläuft, um eine Achse (1) drehbar gelagert, die senkrecht zu den beiden Schenkeln des U-förmig gebogenen Rohrs und durch deren freie Enden verläuft. Weiter ist ein Motor (7) vorgesehen, der dieses Rohr in eine gleichförmige Drehung vorgegebener Geschwindigkeit versetzt, und es sind Mittel (9 bis 12) zur Messung der Verwindung des Rohrs aufgrund der Coriolis-Kraft vorgesehen, wobei diese Verwindung ein Maß für den Massenfluß der Strömung durch das Rohr bzw. die Rohre ist.

EP 0 424 828 A1

# MASSENFLUSSMESSGERÄT FÜR ZWEIPHASENSTRÖMUNGEN FLÜSSIG/GASFÖRMIG

Die Erfindung bezieht sich auf ein Meßgerät zur Ermittlung des Massenflusses in einem Rohr, insbesondere zur Messung des Massenflusses einer Zweiphasenströmung flüssig/gasförmig.

Der Massenfluß einer Strömung läßt sich auf verschiedene Arten messen. Eine dieser Arten verwendet die Corioliskraft, wobei ein U-förmig gebogenes Rohr, das von der Strömung durchflossen wird, in Vibrationen versetzt wird. J.T. Grumski und R.A. Bajura haben in einem Aufsatz "Performance of a Coriolis type mass flow meter in the measurement of two-phase (air-liquid) mixtures", veröffentlicht in Proceedings of the Winter Annual Meeting of the ASME, New Orleans, Louisiana, 9.-14. Dezember 1984 berichtet, daß solche Meßgeräte nur bei sehr geringem Anteil an gasförmigem Massenfluß zuverlässig arbeiten. Dies beruht wohl auf der deutlich unterschiedlichen Massenträgheit der beiden Phasen.

In der US-Patentschrift 4 096 745 ist weiter ein Verfahren zur Messung von Mehrphasenströmungen angegeben, bei dem pendelartige Vibrationen sehr niedriger Frequenz verwendet werden. Über die Meßgenauigkeit dieses Verfahrens liegen jedoch keine praktischen Ergebnisse vor. Sie dürfte nicht sehr hoch liegen.

Es wurden auch bereits Meßgeräte vorgeschlagen, die ähnlich einer Radialumlaufpumpe ein Rotorblatt und ein Statorblatt aufweisen und das Winkelmoment des abgelenkten Zweiphasenflusses messen. Hier handelt es sich jedoch um eine sehr empfindliche mechanische Vorrichtung, die in der Strömung hohe Druckverluste verursacht.

Aufgabe der Erfindung ist es daher, ein Massenflußmeßgerät anzugeben, das robust ist, geringe Druckverluste verursacht und auch bei einem größeren Anteil an gasförmigem Massenfluß zuverlässige Ergebnisse liefert.

Diese Aufgabe wird erfindungsgemäß durch das im Anspruch 1 definierte Massenflußmeßgerät gelöst. Bezüglich von Merkmalen bervorzugter Ausführungsformen wird auf die Unteransprüche verwiesen.

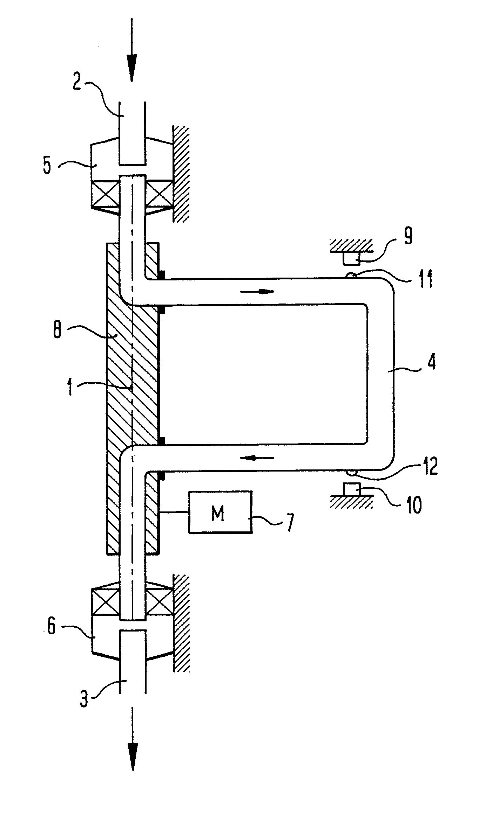

Die Erfindung wird nun anhand eines bevorzugten Ausführungsbeispiels mit Hilfe der einzigen Zeichnung näher erläutert, die schematisch ein Massenflußmeßgerät gemäß der Erfindung zeigt.

Der zu messende Fluß wird in ein Rohrsystem eingespeist, das teils ortsfest und teils rotierend um eine Achse 1 ausgebilet ist. Der Eingang 2 und der Ausgang 3 werden von je einem zur Achse 1 koaxialen ortsfesten Rohr gebildet, während dazwischen ein U-förmig gebogenes Rohr 4 um die Achse 1 drehbar angeordnet ist. Der Übergang erfolgt eingangsseitig und ausgangsseitig je über eine Drehdichtung 5 bzw. 6. Ein Motor 7 treibt das drehbare Rohr an. Die Achse 1 verläuft senkrecht zu den beiden äußeren Schenkeln des U-förmigen Rohrs und durch deren Enden, so daß das Mittelstück des U-förmigen Rohrs 4 bei der Drehung entlang einer Zylinderfläche um die Achse 1 rotiert. Die am Eingang 2 eingespeiste Strömung fließt also zuerst durch den in der Figur oberen Schenkel radial von der Drehachse 1 weg, dann parallel zu dieser Achse und schließlich wieder radial zur Drehachse hin, um schließlich am Ausgang 3 entnommen zu werden.

Um die relativen Positionen der Schenkel des U im Bereich der Drehachse mechanisch zu stabilisieren, sind diese durch eine starre Welle 8 entlang der Drehachse 1 miteinander verbunden.

Aufgrund der Coriolis-Kraft ergibt sich eine Verwindung des U-förmigen Rohrs. Der obere Schenkel, in dem die Flußrichtung radial nach außen weist, biegt sich gegen die Drehrichtung nach rückwärts, während der andere Schenkel, in dem der Fluß zur Achse hin gerichtet ist, gegenüber der neutralen Position winkelmäßig voreilt. Diese Verwindung ist ein Maß für den mittleren Massenfluß im Rohr. Sie wird gemessen durch zwei Sensoren 9 und 10, die als Annäherungssensoren ausgebildet sind und beispielsweise mit einem metallischen Geber 11, 12 zusammenwirken, der jeweils gegenüber dem magnetischen Sensor auf dem U-förmig gebogenen Rohr 4 am achsfernen Ende der beiden Schenkel des U-förmig gebogenen Rohrs angebracht ist. Wenn die beiden Sensoren auf einer Geraden parallel zur Achse 1 ausgerichtet sind, dann bildet die Zeitdifferenz zwischen den von den beiden Sensoren gelieferten Impulsen das Maß für den Massenfluß.

Das Meßgerät kann mit einer Einphasen-Flüssigkeitsströmung geeicht werden. Für ein ideales fluchtendes System müßte die Zeitdifferenz bei einem Massenfluß null auch null sein. Ein eventueller Fluchtungsfehler kann in die Eichung mit einbezogen werden. Die optimale Drehgeschwindigkeit des U-förmig gebogenen Rohrs 4 sollte experimentell gefunden werden, derart, daß entweder die genauesten Ergebnisse erzielt werden oder eine ausreichend starke Verwindung bei einer gegebenen Massenflußrate erzielt wird. Es ist auch möglich, die Drehgeschwindigkeit dem erwarteten Massenfluß anzupassen, denn eine meßbare Verwindung des U-förmigen Rohrs kann entweder für einen geringen Massenfluß mit hoher Drehgeschwindigkeit, oder für einen hohen Massenfluß mit niedriger Drehgeschwindigkeit erreicht werden. Dies stellt einen besonderen Vorzug gegenüber Meßgeräten dar, die nicht rotieren, sondern bei ihrer Resonanzfrequenz vibrieren.

Im Rahmen der Erfindung ist es möglich, die in der Figur gezeigte Vorrichtung abzuwandeln. So kann das U-förmige Rohr ein anderes Profil besitzen als ein rechteckiges. Weiter ist es möglich, mehr als ein Rohr zu verwenden, insbesondere eine symmetrische Anordnung, um Vibrationen des Meßgeräts zu verringern.

Im Rahmen der Erfindung können auch andere Sensoren für die Verformung des oder der U-förmigen Rohre Verwendung finden. So könnte etwa ein kontinuierliches Signal durch einen Sensor erzeugt werden, der als Dehnungsmeßstreifen auf dem drehenden Rohr selbst angebracht ist.

Es ist auch möglich, mehr als ein Paar von Sensoren vorzusehen, um Messungen bei verschiedenen Winkelpositionen des Rohrs durchzuführen.

Wenngleich die Gründe für den beschränkten Anwendungsbereich der bekannten Vibrations-Meßgeräte offenbar bisher noch nicht genau untersucht wurden, so kann doch auf drei mögliche Gründe hingewiesen werden:
- die Phasentrennung aufgrund der schwingenden Vibration des Rohrs,
- Resonanzschwingungen in der Strömung selbst aufgrund der niedrigen Schallgeschwindigkeit in Zweiphasenmischungen, die die Vibrationen des Rohrs überlagern,
- unstete Komponenten im Zweiphasenfluß, die mit den die Vibrationen des U-förmigen Rohrs anregenden elektronischen Rückkopplungskreisen in Wechselbeziehung treten.

Das erfindungsgemäße Massenflußmeßgerät kennt solche Probleme nicht, so daß eine genaue Erfassung von Zweiphasen- und sogar Vielfachkomponentenströmungen möglich ist. Ein weiterer Vorteil des erfindungsgemäßen Massenflußmeßgeräts liegt darin, daß es durch äußere Vibrationen nicht beeinträchtigt wird, da es nicht auf einer Vibrationsmessung beruht.

## Ansprüche

1. Massenflußmeßgerät für Zweiphasenströmungen flüssig/gasförmig, dadurch gekennzeichnet, daß mindestens ein U-förmig gebogenes Rohr (4), durch das die zu messende Strömung zwischen zwei Drehdichtungen (5, 6) verläuft, um eine Achse (1) drehbar gelagert ist, die senkrecht zu den beiden Schenkeln des U-förmig gebogenen Rohrs und durch deren Enden verläuft, daß ein Motor (7) vorgesehen ist, der dieses Rohr bzw. diese Rohre in eine gleichförmige Drehung vorgegebener Geschwindigkeit versetzt, und daß Mittel (9 bis 12) zur Messung der Verwindung des Rohrs bzw. der Rohre aufgrund der Coriolis-Kraft vorgesehen sind, wobei diese Verwindung ein Maß für den Massenfluß der Strömung durch das Rohr bzw. die Rohre ist.

2. Massenflußmeßgerät nach Anspruch 1, dadurch gekennzeichnet, daß die beiden Schenkel des mindestens einen U-förmigen Rohrs (4) entlang der Drehachse (1) durch eine Welle (8) starr miteinander verbunden sind.

3. Massenflußmeßgerät nach einem der Ansprüche 1 bis 2, dadurch gekennzeichnet, daß die Mittel zur Messung der Verwindung des mindestens einen U-förmigen Rohrs (4) aus zwei ortsfesten Annäherungssensoren (9, 10) bestehen, die je mit dem achsfernen Ende eines der U-förmigen Schenkel zusammenwirken.

4. Massenflußmeßgerät nach einem der Ansprüche 1 bis 2, dadurch gekennzeichnet, daß die Mittel zur Messung der Verwindung des mindestens einen U-förmigen Rohrs (4) aus mehreren Paaren von ortsfesten Annäherungssensoren bestehen, die je mit dem achsfernen Ende eines der U-förmigen Schenkel in verschiedenen Winkelstellungen des drehenden Rohrs zusammenwirken.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | EP-A-0 171 937  (BRITISH PETROLEM)<br>* Seite 1, Zeile 1 - Seite 4, Zeile 35; Figuren 1, 2 *<br>– – – | 1,2,3,4 | G 01 F<br>1/84 |
| Y | MESSEN + PRUFEN. vol. 23, no. 4, April 1987, BAD WORISHOFEN DE Seiten 192 - 196; W. STEFFEN et al: "DIREKTE MASSEDURCHFLUSSMESSUNG, INSBESONDERE MIT CORIOLISVERFAHREN"<br>* Seite 194, linke Spalte, Absatz 2; Figur 6D *<br>– – – | 1,2 | |
| A | DE-A-3 230 445  (KUPPERS)<br>* Seite 9, Absatz 3 - Seite 10, Absatz 5; Figur 1 *<br>– – – | 1-4 | |
| A | PATENT ABSTRACTS OF JAPAN vol. 7, no. 231 (P-229)(1376) 13 Oktober 1983,<br>& JP-A-58 120122 (YOKOGAWA DENKI SEISAKUSHO K.K.) 16 Juli 1983,<br>* das ganze Dokument *<br>– – – | 1-4 | |
| D,A | US-A-4 096 745  (RIVKIN)<br>* Spalte 6, Zeilen 42 - 46 ** Spalte 7, Zeilen 1 - 26; Figur 1 *<br>– – – – – | 1,3,4 | |

RECHERCHIERTE SACHGEBIETE (Int. Cl.5)

G 01 F

Der vorliegende Recherchenbericht wurde für alle Patentansprüche erstellt

| Recherchenort | Abschlußdatum der Recherche | Prüfer |
|---|---|---|
| Den Haag | 31 Januar 91 | HEINSIUS R. |